# EUROPÄISCHE PATENTANMELDUNG

(11) **EP 3 628 646 A1**
(43) Veröffentlichungstag der Anmeldung: **01.04.2020**
(21) Anmeldenummer: 18197499.9
(22) Anmeldetag: 28.09.2018
(51) Int. Cl.: C03B 5/033, C03B 5/42, C03B 17/04, F27B 14/10

(54) **MEHRTEILIGER SCHMELZTIEGEL ZUM ZIEHEN EINES GLASSTRANGS, VERFAHREN ZUR HERSTELLUNG DES SCHMELZTIEGELS SOWIE VERTIKAL-TIEGELZIEHVERFAHREN**

(71) Anmelder: Heraeus Quarzglas GmbH & Co. KG, 63450 Hanau (DE)
(72) Erfinder: GEIPEL, Thomas, 63619 Bad Orb (DE); GROMANN, Boris, 63743 Aschaffenburg (DE); WHIPPEY, Nigel, 63500 Seligenstadt (DE)
(74) Vertreter: Staudt, Armin Walter

(57) **Zusammenfassung**

Bekannte Schmelztiegel für den Einsatz in einem Tiegelziehverfahren haben eine sich entlang einer Tiegel-Längsachse von einem Boden mit mindestens einem Bodenauslass zu einer Einfüllöffnung erstreckende Tiegelwandung, die einen Tiegelinnenraum begrenzt. Um hiervon ausgehend einen kostengünstigen Schmelztiegel bereitzustellen, wird vorgeschlagen, dass die Tiegelwandung mehrteilig ausgeführt ist, wobei sie sich in Richtung der Längsachse gesehen aus mindestens einem unteren Wandungsformteil und aus einem oberen Wandungsformteil zusammensetzt, wobei das untere und das obere Wandungsformteil an einer Fügestelle miteinander verbunden sind.

## Beschreibung

### Technisches Gebiet

Die vorliegende Erfindung betrifft einen Schmelztiegel für den Einsatz in einem Tiegelziehverfahren, mit einer sich entlang einer Tiegel-Längsachse von einem Boden mit mindestens einem Bodenauslass zu einer Einfüllöffnung erstreckenden Tiegelwandung, die einen Tiegelinnenraum begrenzt.

Außerdem betrifft die Erfindung ein Verfahren zu Herstellung eines Schmelztiegels für den Einsatz in einem Tiegelziehverfahren, mit einer sich entlang einer Tiegel-Längsachse von einem Boden mit mindestens einem Bodenauslass zu einer Einfüllöffnung erstreckenden Tiegelwandung, die einen Tiegelinnenraum begrenzt.

Weiterhin betrifft die Erfindung ein Vertikal-Tiegelziehverfahren zur Herstellung eines zylinderförmigen Bauteils aus Glas, indem einem Tiegel-Innenraum eines Schmelztiegels Glasausgangsmaterial zugeführt und darin mittels einer Heizeinrichtung erweicht wird, und die erweichte Glasmasse durch mindestens einen Bodenauslauf des Schmelztiegels als Glasstrang abgezogen wird.

### Stand der Technik

Derartige Schmelztiegel bestehen typischerweise aus einem auch bei hohen Einsatztemperaturen formbeständigen Refraktärmetall aus der Gruppe Hafnium, Niob, Tantal, Molybdän, Wolfram oder einer Refraktärmetalllegierung dieser Metalle. Eine Refraktärmetalllegierung ist eine Legierung mit einem Anteil von einem der genannten Refraktärmetalle von mindestens 50 Gew.-%. Diese Metalle und deren Refraktärmetalllegierungen werden im Folgenden auch kurz als "Refraktärmetalle" bezeichnet.

Außerdem sind hochschmelzende Metalle und Basislegierungen aus der Gruppe Iridium, Rhenium, Osmium, Ruthenium als Tiegelwerkstoff bekannt. Als Basislegierung wird hier eine Legierung mit einem Anteil eines der genannten hochschmelzenden Metalle von mindestens 50 Gew.-% definiert. Diese Metalle und deren Basislegierungen werden im Folgenden auch kurz als "Edelmetall" bezeichnet.

Die Edelmetalle zeichnen sich im Vergleich zu den Refraktärmetallen durch eine bessere Korrosionsbeständigkeit gegenüber der heißen Glasschmelze aus, sind aber auch deutlich teurer.

Um die Kosten für die vollständige Ausfertigung des Schmelztiegels aus einem teuren Edelmetall zu reduzieren, wurde vorgeschlagen, lediglich auf der Innenseite eines ansonsten aus Refraktärmetall bestehenden Schmelztiegels eine Schutzschicht aus Iridium, Rhenium, Osmium oder Ruthenium aufzubringen. Ein Schmelztiegel dieser Art ist beispielsweise aus der US 6,739,155 B1 bekannt. Die Schutzschicht ist dabei entweder mit der Tiegelwandung metallurgisch verbunden oder sie bildet ein separates Einsatzteil, das an der Tiegelwandung anliegt und an dieser mechanisch fixiert ist. Sie erstreckt sich über die gesamte Tiegel-Innenwandung oder mindestens von der Tiegel-Einfüllöffnung entlang der Seitenwand bis nahe zur Bodenöffnung. Typische Dicken derartiger Schutzschichten liegen im Bereich von 0,5 mm bis 1,27 mm.

Eine weitere Kostenreduzierung durch das Vermeiden teurer Beschichtungsmaterialien ergibt sich bei einem Schmelztiegel gemäß der US 2011/0281227 A1. Bei diesem Schmelztiegel ist die Tiegel-Innenwandung aus Refraktärmetall mit einer Schutzschicht aus einem gasdichten, oxidischen Werkstoff belegt, die ein Oxid aus der Gruppe Aluminium, Magnesium, Yttrium, Zirkonium und Seltenerdmetalle enthält. Diese Schutzschicht unterliegt im Temperaturbereich von 20 °C bis 1800 °C keiner Phasenumwandlung, erfährt also keine destruktive Volumenänderung und schmilzt auch in dem Temperaturbereich nicht auf. Die Schutzschicht ist ausschließlich auf dem Flächenbereich der Schmelztiegel-Innenwandung aufgebracht, die an den Gas- und Schüttgutraum angrenzt. Dort vermindert sie die Einwirkung korrosiver Gase, insbesondere von Sauerstoff und chlorhaltigen Verbindungen und vermindert so den Eintrag von Refraktärmetall in die Glasschmelze.

Die Schutzschicht wird lagenweise durch Vakuum-Plasmaspritzen verschiedenen oxidischer Pulver mit einer Körnung im Bereich zwischen 10 und 100 µm eingesetzt.

Einen anderen Weg schlägt die WO 2017/161391 A1 vor. Demnach wird bei einem aus Refraktärmetall bestehenden Tiegel die Innenwandung mindestens in einer oberflächlichen Randzone durch Beaufschlagung mit lokaler Druckspannung verdichtet und geglättet. Die Restporosität der oberflächlichen Randzone ist im Vergleich zu dem dahinter liegenden Volumen reduziert und bietet der Glasschmelze geringere Angriffsmöglichkeit und ist daher beständiger gegen einen korrosiven Angriff.

Zur Herstellung des Schmelztiegels wird ein Halbzeug in Form von gewalztem Blech durch Biegen oder Fließpressen in Tiegelform gebracht. Alternativ dazu werden Formteile durch Pulverpressen in Tiegelform gebracht und anschließend die Tiegel-Innenwandung mit lokaler Druckspannung beaufschlagt, beispielsweise durch einen Wälzkörper in einem Glättwalzprozess oder durch Kugelstrahlen.

Der aus der EP 2 947 054 A1 bekannte Schmelztiegel besteht aus mehreren, auf Stoß zusammengesetzten Wandteilen aus Refraktärmetall. Die Stoßstellen sind mit einer Nut versehen, in die metallische Dichtelemente aus Hafnium, Niob, Zirkonium, Platin oder Legierungen dieser Metalle eingelegt sind. Beim Aufheizen werden die Stoßstellen gasdicht verschlossen, so dass das Eindringen verunreinigter oder feuchter Gase während des Sinterns der Einzelteile und während des Betriebs des Bauteils verhindert wird.

Die bekannten Schmelztiegel werden in Vertikalziehverfahren zur Herstellung zylinderförmiger Bauteile aus Glas, insbesondere aus Quarzglas, mit beliebigem Querschnittsprofil eingesetzt. Dabei wird dem Schmelztiegel von oben durch die Tiegel-Einfüllöffnung partikelförmiges Glasausgangsmaterial zugeführt und darin zu einer viskosen Glasmasse erschmolzen und über eine im Bodenbereich des Schmelztiegels vorgesehene Ziehdüse nach unten als Glasstrang abgezogen. Derartige viskose Glasmassen werden hier und im Folgenden auch als "Glasschmelze" bezeichnet. Sie bestehen aus Schmelzen oxidischer Werkstoffe wie zum Beispiel silikatischer Gläser, wie beispielsweise Quarzglas, Boratgläser, wie beispielsweise Borosilikatglas, oder Schmelzen von Aluminiumoxid.

Beispielsweise wird das aus der US 2011/0281227 A1 bekannte Vertikalziehverfahren zur Herstellung von Rohren aus Quarzglas eingesetzt. Zu diesem Zweck wird dem Schmelztiegel über einen von oben in den Schmelztiegel hineinragenden Schütttrichter kontinuierlich teilchenförmiges Si02-Ausgangsmaterial zugeführt und darin bei hoher Temperatur (> 2050 °C) unter reduzierend wirkendem Schutzgas (Wasserstoff) erweicht. Es bildet sich eine viskose Quarzglasmasse die über die Ziehdüse nach unten in Form eines Quarzglasrohres abgezogen wird.

### Technische Aufgabenstellung

Die bekannten Schmelztiegel weisen eine gute Korrosionsbeständigkeit gegenüber der Glasschmelze auf und sie tragen zu einer Verringerung der Blasenbildung und des Eintrags von Verunreinigungen in die Glasschmelze bei.

Die dafür erforderlichen Maßnahmen, wie das Erzeugen von Innenbeschichtungen, das Einfügen von Dichtelementen oder die oberflächennahe Materialverdichtung, sind aber entweder material- oder zeitaufwändig oder beides und tragen zu hohen Herstellkosten sowohl für den Schmelztiegel selbst als auch für die unter Einsatz des Schmelztiegels erzeugten Glasprodukte bei.

Ausgehend von diesem Stand der Technik liegt der Erfindung die Aufgabe zugrunde, einen kostengünstigen Schmelztiegel für den Einsatz in einem Tiegelziehverfahren bereitzustellen und ein Verfahren zur Herstellung eines derartigen Schmelztiegels anzugeben.

Außerdem liegt der Erfindung die Aufgabe zugrunde, ein Verfahren zur kostengünstigen Herstellung von Glasprodukten anzugeben.

### Allgemeine Beschreibung der Erfindung

Hinsichtlich des Schmelztiegels wird diese Aufgabe ausgehend von einem Schmelztiegel der eingangs genannten Gattung erfindungsgemäß dadurch gelöst, dass die Tiegelwandung mehrteilig ausgeführt ist, wobei sie sich in Richtung der Längsachse gesehen aus mindestens einem unteren Wandungsformteil und aus einem oberen Wandungsformteil zusammensetzt, wobei das untere Wandungsformteil und das obere Wandungsformteil an einer Fügestelle miteinander verbunden sind.

Beim erfindungsgemäßen Schmelztiegel ist die Tiegelwandung mehrteilig ausgeführt, wobei die mehrteilige Ausführung in Richtung der vertikal orientierten Tiegel-Längsachse von unten nach oben gesehen mindestens ein unteres Wandungsformteil und mindestens ein oberes Wandungsformteil umfasst. Eine Besonderheit dieses konstruktiven Aufbaus liegt darin, dass das untere und das obere Wandungsformteil dadurch einfach an unterschiedliche Erfordernisse im unteren und oberen Bereich des Schmelztiegel-Innenraums anpassbar sind. Somit müssen nicht beide Wandungsformteile sowohl die maßgeblichen Anforderungen im unteren als auch im oberen Bereich des Schmelztiegel-Innenraums erfüllen.

Die in ihren Werkstoffen und/oder anderen Eigenschaften an die Gegebenheiten im unteren und im oberen Bereich des Schmelztiegel-Innenraums individuell angepassten Wandungsformteile bilden somit den mehrteiligen Schmelztiegel oder einen Teil davon. Die Mehrteiligkeit erfordert einen Fügeprozess, bei dem die vorgefertigten Wandungsformteile an mindestens einer Fügestelle unmittelbar oder mittelbar - das heißt, über ein Zwischenbauteil oder über mehrere Zwischenbauteile - miteinander verbunden werden. Bei einer Ausführungsform mit einem Zwischenbauteil oder mit mehreren Zwischenbauteilen umfasst die Fügestelle mehrere Fügeverbindungen. Die Fügeverbindung ist beispielsweise form- oder stoffschlüssig. Die Fügestelle kann ohne oder mit Unterbrechungen um die Schmelztiegel-Längsachse und koaxial zu dieser verlaufen. Als stoffschlüssige Verbindung kann die Fügestelle beispielsweise als umlaufende Schweiß-, Löt- oder als Versinterungsnaht ausgeführt sein. Eine formschlüssige Verbindung an der Fügestelle kann beispielsweise mittels Schrauben, Klammern oder Nieten, durch direkte Gewindeverschraubung der Wandungsformteile erfolgen.

Nachbearbeitungen der Wandungsformteile sind im Idealfall nicht erforderlich. Andererseits können erforderliche Nachbearbeitungen, wie etwa Beschichtungen, Verdichtungen oder Abdichtungen, leicht am oberen beziehungsweise am unteren Wandungsformteil ausgeführt und darauf beschränkt werden. Auch dadurch können die Herstellungskosten des Schmelztiegels gesenkt werden. Beispielsweise können Nachbearbeitungen der Innenwandung beim oberen Wandungsformteil zur Verbesserung der Korrosionsbeständigkeit im Kontakt mit der heißen Gasphase oder zur Abdichtung in diesem Schmelztiegelbereich beitragen. Umgekehrt können beim unteren Wandungsformteil andere Eigenschaften optimiert sein, die beispielsweise zur Verbesserung der Korrosionsbeständigkeit im Kontakt mit der Glasschmelze beitragen.

So kann beispielsweise das obere Wandungsformteil gasdicht ausgeführt sein, um einen Gaseintrag durch die Tiegelwandung in den Schmelztiegel-Innenraum oberhalb der Glasschmelze zu verhindern. Um dies zu erreichen, kommen beispielsweise Innenbeschichtungen aus hochschmelzendem Edelmetall oder die aus dem Stand der Technik bekannten Methoden zur Verdichtung einer inneren Zone der Innwandung in Betracht.

Andererseits hat es sich gezeigt, dass beim bestimmungsgemäßen Einsatz des Schmelztiegels die viskose Glasmasse (Gasschmelze) im Bereich unterhalb der Schmelzoberfläche die Tiegelwandung nach außen abdichtet. Eine anfänglich hohe Gasdichtigkeit in diesem Bereich der Tiegelwandung ist nicht unbedingt erforderlich. Daher ist beim unteren Wandungsformteil eine im Vergleich zum oberen Wandungsformteil höhere Gasdurchlässigkeit akzeptabel. Im Hinblick auf die damit einhergehenden geringen Herstellungskosten ist es sogar bevorzugt, wenn das untere Wandungsformteil nicht gasdicht ist oder aus einem Werkstück mit anfänglich hoher Gasdurchlässigkeit ausgeführt ist.

In der Regel ist bereits vor dem bestimmungsgemäßen Einsatz des Schmelztiegels die voraussichtliche Position der Oberfläche der darin aufzunehmenden Glasschmelze bekannt. Diese Höhenposition ist eine für den spezifischen Schmelztiegel wichtige Kenngröße und kann beispielsweise in einer Spezifikation oder anhand einer anderen Vorgabe festgelegt sein. Diese Höhenposition wird im Folgenden auch als "Schmelzoberfläche" bezeichnet. Aus Gründen der Prozessstabilität wird die Schmelzoberfläche auch während des Einsatzes bevorzugt möglichst konstant gehalten. Auch aus anderen Gebieten der Technik sind derartige konstruktive Vorfestlegungen von Höhenpositionen in oder an Behältern bekannt, beispielsweise die "Konstruktionswasserlinie" bei einem Tanker, die den maximalen Wasserspiegel an der Bordwand durch Beladung festlegt oder maximale und minimale Füllstandshöhen von Flüssigkeitsbehältern. Beim Vertikal-Tiegelziehverfahren ergibt sich bei der Prädiktion oder Vorab-Festlegung der Höhenposition der Schmelzoberfläche die Schwierigkeit, dass diese über den Tiegel-Innenquerschnitt gesehen nicht in einer horizontalen Ebene verläuft, sondern eine konkave Krümmung aufweist, da infolge der typischen Außenbeheizung des Schmelztiegels die Glasschmelze am Tiegelrand früher einsetzt und demnach eine höhere Höhenposition hat als in der Tiegelmitte. In diesen Fällen wird als Höhenposition der Schmelzoberfläche die Höhenposition der Glasschmelze an der Tiegel-Innenwand verstanden.

Die Schmelzoberfläche unterteilt den Tiegel-Innenraum in Richtung der vertikal orientierten Längsachse von unten nach oben gesehen in einen Schmelzraum zur Aufnahme von erweichtem Glasmaterial und einen an den Schmelzraum nach oben angrenzenden Gas- und Schüttgutraum. In diesem Raum liegt bestimmungsgemäßen Einsatz teilchenförmiges Glasausgangsmaterial, und darin enthaltenes Gas kann zur Blasenbildung beitragen.

Die Unterteilung des Schmelztiegel-Innenraums in Schmelzraum einerseits und in einen Gas- und Schüttgutraum andererseits spiegelt sich beim bestimmungsgemäßen Einsatz des Schmelztiegels n der konstruktiven Einteilung der Schmelztiegel-Wandung in das untere Wandungsformteil und in das obere Wandungsformteil wider. Dabei ist das obere Wandungsformteil beispielsweise allein oder im Wesentlichen dem Gas- und Schüttgutraum zugeordnet. Das bedeutet, die an den Gas- und Schüttgutraum angrenzende Oberfläche der Schmelztiegel-Innenwandung wird ausschließlich oder im Wesentlichen vom oberen Wandungsformteil gestellt. Das untere Wandungsformteil ist hingegen allein oder im Wesentlichen dem Schmelzraum zugeordnet. Das bedeutet, die an den Schmelzraum angrenzende Oberfläche der Schmelztiegel-Innenwandung wird ausschließlich oder im Wesentlichen vom unteren Wandungsformteil gestellt.

Es hat sich besonders bewährt, wenn die an den Gas- und Schüttgutraum angrenzende Tiegelwandung von dem oberen Wandungsformteil gebildet wird.

Das bedeutet, die an den Gas- und Schüttgutraum angrenzende Oberfläche der Schmelztiegel-Innenwandung wird ausschließlich vom oberen Wandungsformteil gestellt. Das obere Wandungsformteil kann dabei genau an der vorbestimmten Schmelzspiegel-Höhe enden. Insbesondere bei Ausführungsformen des Schmelztiegels, bei denen das obere Wandungsformteil auch eine hohe Beständigkeit gegenüber der Glasschmelze hat, kann sich das obere Wandungsformteil aber auch vorteilhaft unter den Schmelzspiegel bis in den Schmelzraum hinein erstrecken.

Es hat sich außerdem bewährt, wenn das untere Wandungsformteil ausschließlich dem Schmelzraum zugewandt ist.

Das bedeutet, das untere Wandungsformteil stellt ausschließlich die gesamte an den Schmelzraum angrenzende Oberfläche der Schmelztiegel-Innenwandung oder einen Teil derselben, aber keinen Anteil der an den Gas- und Schüttgutraum angrenzenden Innenwandung. Diese Ausführungsformen des Schmelztiegels ist vor allem dann vorteilhaft, wenn das untere Wandungsformteil im Hinblick auf geringe Herstellungskosten ausgelegt ist, jedoch eine geringe Eignung für den Einsatz als Begrenzungswandung im Gas- und Schüttgutraum hat, beispielsweise wegen einer zu hohen Gasdurchlässigkeit.

Die Fügestelle kann am Übergang zwischen Schmelzraum und Gas- und Schüttgutraum liegen oder sie kann in beiden besagten Tiegel-Innenraumbereichen verlaufen oder sie kann nur in einem oder dem anderen der beiden besagten Tiegel-Innenraumbereiche verlaufen. Vorzugsweise verläuft die Fügestelle unterhalb des Gas- und Schüttgutraums.

Insbesondere bei solchen Ausführungsformen des Schmelztiegels, bei denen die Position der Oberfläche der darin aufzunehmenden Glasschmelze beim bestimmungsgemäßen Einsatz des Schmelztiegels variieren oder nicht vorgegeben werden kann, hat es sich bewährt, wenn die Tiegelwandung eine Höhe H_{T} aufweist - definiert als Abstand zwischen einer unteren Höhenebene, in der sich ein Bodenauslass des Schmelztiegels erstreckt und einer parallel dazu verlaufenden oberen Höhenebene, in der sich eine Tiegel-Einfüllöffnung erstreckt - und dass sich die Fügestelle in einer Höhenposition H_{F} befindet, für die gilt: 0,6xH_{T} < H_{F}< 0,9xH_{T}.

Der Anteil des unteren Wandungsformteils am Volumen der Schmelztiegel-Wandung ist dabei größer als der Anteil des oberen Wandungsformteils. Durch eine kostengünstigere Fertigung des unteren Wandungsformteils können die Herstellungskosten daher besonders deutlich reduziert werden.

In dem Zusammenhang ist zu beachten, dass sich bei einem Schmelztiegel mit mehreren Bodenauslässen die Höhe H_{T} der Tiegelwandung von der Höhenebene des niedrigsten Bodenauslasses aus bemisst. Die Fügestelle kann in einer einzigen Höhenposition der Tiegelseitenwand verlaufen oder sie kann sich über einen Höhenbereich erstrecken. Im letztgenannten Fall wird als Höhenposition H_{F} die mittlere Höhenposition zwischen maximaler und minimaler Erstreckung definiert.

Bei einer bevorzugten Ausführungsform des Schmelztiegels ist das obere Wandungsformteil als nahtloses Rundformteil ausgebildet.

Das nahtlose obere Wandungsformteil ist im Hinblick auf eine geringe Gasdurchlässigkeit optimiert. Die Herstellung des nahtlosen Rundformteils erfolgt beispielsweise durch Druckumformung von gewalztem Blech, wobei das gewalzte Blech vorzugsweise aus Wolfram, Molybdän, Niob, Tantal oder einer Legierung dieser Metalle gefertigt ist. Dieser Fertigungsprozess ist vergleichsweise aufwändig. Die Druckumformung erfolgt vorzugsweise durch Gesenkschmieden, Fließpressen, insbesondere durch Heißdrücken.

Demgegenüber ist die gleiche oder eine andere Ausführungsform des Schmelztiegels dadurch gekennzeichnet, dass das untere Wandungsformteil aus mehreren Wandelementen zusammengesetzt ist.

Dies ermöglicht eine vergleichsweise kostengünstige Fertigung eines rohr- oder tiegelförmig gestalteten, unteren Wandungsformteils. Benachbarte Wandelemente können beispielsweise mittels stiftförmiger Verbindungselemente, wie Nieten, Schrauben, Bolzen und dergleichen formschlüssig miteinander verbunden sein. Gasdichtheit ist dabei nicht erforderlich.

Der erfindungsgemäße wird in einem Vertikal-Tiegelziehverfahren für die Herstellung von zylinderförmigen oder plattenförmigen Produkten aus Glas, insbesondere aus Quarzglas eingesetzt.

Hinsichtlich des Verfahrens zur Herstellung des Schmelztiegels wird die oben angegebene Aufgabe ausgehend von einem Verfahren der eingangs genannten Gattung erfindungsgemäß dadurch gelöst, dass die Tiegelwandung in Richtung der Längsachse gesehen mehrteilig aus mindestens einem unteren Wandungsformteil und mindestens einem oberen Wandungsformteil zusammengesetzt wird, wobei anhand eines ersten Fertigungsprozesses das untere Wandungsformteil und anhand eines zweiten Fertigungsprozesses das obere Wandungsformteil gefertigt werden, und anschließend das untere und das obere Wandungsformteil miteinander verbunden werden.

Beim erfindungsgemäßen Verfahren wird ein Schmelztiegel mit mehrteiliger Tiegelwandung erzeugt. Die mehrteilige Tiegelwandung umfasst in Richtung der vertikal orientierten Tiegel-Längsachse von unten nach oben gesehen mindestens ein unteres Wandungsformteil und mindestens ein oberes Wandungsformteil. Eine Besonderheit dieses konstruktiven Aufbaus liegt darin, dass das untere und das obere Wandungsformteil an unterschiedliche Erfordernisse im unteren und oberen Bereich des Schmelztiegel-Innenraums vergleichsweise einfach angepasst werden können.

Die in ihren Werkstoffen und/oder anderen Eigenschaften an die Gegebenheiten im unteren und im oberen Bereich des Schmelztiegel-Innenraums individuell angepassten Wandungsformteile bilden den mehrteiligen Schmelztiegel oder einen Teil davon.

Nachbearbeitungen der Wandungsformteile sind im Idealfall nicht erforderlich. Andererseits können erforderliche Nachbearbeitungen, wie etwa Beschichtungen, Verdichtungen oder Abdichtungen, leicht am oberen beziehungsweise am unteren Wandungsformteil ausgeführt und darauf beschränkt werden. Auch dadurch können die Herstellungskosten des Schmelztiegels gesenkt werden. Beispielsweise können Nachbearbeitungen der Innenwandung beim oberen Wandungsformteil zur Verbesserung der Korrosionsbeständigkeit im Kontakt mit der heißen Gasphase oder zur Abdichtung in diesem Schmelztiegelbereich beitragen. Umgekehrt können beim unteren Wandungsformteil andere Eigenschaften optimiert sein, die beispielsweise zur Verbesserung der Korrosionsbeständigkeit im Kontakt mit der Glasschmelze beitragen.

So kann beispielsweise das obere Wandungsformteil gasdicht ausgeführt sein, um einen Gaseintrag durch die Tiegelwandung in den Schmelztiegel-Innenraum oberhalb der Glasschmelze zu verhindern. Um dies zu erreichen kommen beispielsweise Innenbeschichtungen aus hochschmelzendem Edelmetall oder die aus dem Stand der Technik bekannten Methoden zur Verdichtung einer inneren Zone der Innwandung in Betracht.

Andererseits hat es sich gezeigt, dass beim bestimmungsgemäßen Einsatz des Schmelztiegels die viskose Glasmasse (Gasschmelze) im Bereich unterhalb der Schmelzoberfläche die Tiegelwandung nach außen abdichtet. Eine anfänglich hohe Gasdichtigkeit in diesem Bereich der Tiegelwandung ist nicht unbedingt erforderlich. Daher ist beim unteren Wandungsformteil eine im Vergleich zum oberen Wandungsformteil höhere Gasdurchlässigkeit akzeptabel. Im Hinblick auf die damit einhergehenden geringen Herstellungskosten ist es sogar bevorzugt, wenn das untere Wandungsformteil nicht gasdicht gefertigt wird, oder wenn es aus einem Werkstück mit anfänglich hoher Gasdurchlässigkeit ausgeführt ist.

Die vorgefertigten Wandungsformteile werden anhand eines Fügeprozesses unmittelbar oder mittelbar - das heißt, über ein Zwischenbauteil oder über mehrere Zwischenbauteile - miteinander verbunden. Dabei bildet sich mindestens eine Fügestelle, die beispielsweise als Schweißnaht oder Versinterung ausgeführt sein kann und die ohne oder mit Unterbrechungen um die Schmelztiegel-Längsachse und koaxial zu dieser verlaufen kann. Bei einer Verfahrensweise werden die vorgefertigten Wandungsformteile nicht unmittelbar miteinander, sondern über ein Zwischenbauteil oder über mehrere Zwischenbauteilen miteinander verbunden, so dass die Fügestelle mehrere Fügeverbindungen umfasst. Die Fügeverbindung ist beispielsweise form- oder stoffschlüssig.

Als stoffschlüssige Verbindung kann die Fügestelle beispielsweise als umlaufende Schweiß-, Löt- oder als Versinterungsnaht ausgeführt sein. Eine formschlüssige Verbindung an der Fügestelle kann beispielsweise mittels Schrauben, Klammern oder Nieten oder durch direkte Gewindeverschraubung der Wandungsformteile erfolgen.

Hinsichtlich der Höhenposition der Fügestelle entlang der vertikal orientierten Schmelztiegel-Innenwandung gesehen, hat sich eine Verfahrensweise bewährt, bei der die Tiegelwandung eine Höhe H_{T} aufweist - definiert als Abstand zwischen einer unteren Höhenebene, in der sich ein Bodenauslass des Schmelztiegels erstreckt und einer parallel dazu verlaufenden oberen Höhenebene, in der sich eine Tiegel-Einfüllöffnung erstreckt - und wobei die Fügestelle in einer Höhenposition H_{F} erzeugt wird, für die gilt: 0,6xH_{T} < H_{F} < 0,9xH_{T}.

Der Anteil des unteren Wandungsformteils am Volumen der Schmelztiegel-Wandung ist dabei größer als der Anteil des oberen Wandungsformteils. Durch eine kostengünstigere Fertigung des unteren Wandungsformteils können die Herstellungskosten daher besonders deutlich reduziert werden.

In dem Zusammenhang ist zu beachten, dass sich bei einem Schmelztiegel mit mehreren Bodenauslässen die Höhe H_{T} der Tiegelwandung von der Höhenebene des niedrigsten Bodenauslasses aus bemisst.. Die Fügestelle kann in einer einzigen Höhenposition der Tiegelseitenwand verlaufen oder sie kann sich über einen Höhenbereich erstrecken. Im letztgenannten Fall wird als Höhenposition H_{F} die mittlere Höhenposition zwischen maximaler und minimaler Erstreckung definiert.

Vorzugsweise wird das obere Wandungsformteil als nahtloses Rundformteil geformt.

Das nahtlose obere Wandungsformteil ist im Hinblick auf eine geringe Gasdurchlässigkeit optimiert. Das nahtlose Rundformteils wird beispielsweise durch Druckumformung, vorzugsweise durch Gesenkschmieden, Fließpressen und insbesondere durch Heißdrücken von gewalztem Blech erzeugt, wobei das gewalzte Blech vorzugsweise aus Wolfram, Molybdän, Niob, Tantal oder einer Legierung dieser Metalle gefertigt ist.

Dieser Fertigungsprozess ist vergleichsweise aufwändig. Demgegenüber ist eine bevorzuget Verfahrensweise zur Herstellung des unteren Wandungsformteils des Schmelztiegels dadurch gekennzeichnet, dass es aus mehreren Wandelementen zusammengesetzt wird.

Dies ermöglicht eine vergleichsweise kostengünstige Fertigung eines rohr- oder tiegelförmig gestalteten, unteren Wandungsformteils. Benachbarte Wandelemente können beispielsweise mittels stiftförmiger Verbindungselemente, wie Nieten, Schrauben, Bolzen und dergleichen formschlüssig miteinander verbunden sein. Gasdichtheit ist dabei nicht erforderlich.

Hinsichtlich des Vertikal-Tiegelziehverfahrens zur Herstellung eines zylinderförmigen Bauteils aus Glas wird die oben angegebene Aufgabe ausgehend von dem Vertikal-Tiegelziehverfahren der eingangs genannten Gattung erfindungsgemäß dadurch gelöst, dass ein mehrteiliger Schmelztiegel gemäß der Erfindung oder ein nach dem erfindungsgemäßen Verfahren erzeugter Schmelztiegel eingesetzt wird.

Der nach der Erfindung hergestellte Schmelztiegel verfügt über eine mehrteilige Tiegelwandung, die in Richtung der vertikal orientierten Tiegel-Längsachse von unten nach oben gesehen mindestens ein unteres Wandungsformteil und mindestens ein oberes Wandungsformteil umfasst. Die Wandungsformteile werden in getrennten Verfahren erzeugt und danach zusammengefügt. Dadurch können die Wandungsformteile an unterschiedliche Erfordernisse angepasst werden, insbesondere kann das untere Wandungsformteil an Erfordernisse angepasst werden, die sich durch den Kontakt mit der heißen Glasschmelze ergeben, und das obere Wandungsformteil kann an Erfordernisse angepasst werden, die sich durch Kontakt mit der heißen, reduzierend wirkenden Gasphase und hinsichtlich der Dichtigkeit der Wandung im oberen Schmelztiegelbereich ergeben.

Die Fertigungskosten für den Schmelztiegel lassen sich auf diese Weise verringern und damit auch die Herstellkosten für die unter Einsatz des Schmelztiegels erzeugten Glasprodukte, insbesondere von Produkten aus Quarzglas.

### Ausführunqsbeispiel

Nachfolgend wird die Erfindung anhand von Ausführungsbeispielen und einer Zeichnung näher erläutert. Im Einzelnen zeigt in schematischer Darstellung
- **Figur 1**: eine Ausführungsform des erfindungsgemäßen Schmelztiegels in einem Längsschnitt entlang der Längsachse,
- **Figur 2**: eine Ausführungsform eines oberen Wandungsformteils in einer Draufsicht,
- **Figur 3**: eine Ausführungsform eines unteren Wandungsformteils in einer Draufsicht,
- **Figur 4**: eine weitere Ausführungsform des erfindungsgemäßen Schmelztiegels in einem Längsschnitt entlang der Längsachse,
- **Figur 5**: eine weitere Ausführungsform des erfindungsgemäßen Schmelztiegels in einem Längsschnitt entlang der Längsachse, und
- **Figur 6**: einen Ziehofen zur Herstellung von zylinderförmigen Produkten aus Quarzglas.

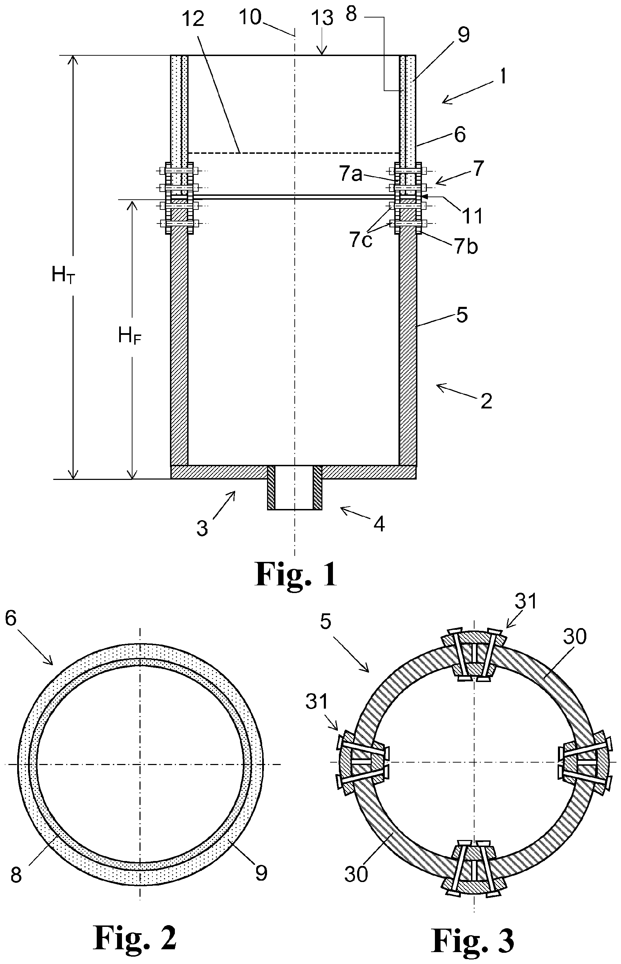

Der in **Figur 1** schematisch dargestellte Schmelztiegel 1 zur Aufnahme einer viskosen Quarzglasmasse verfügt über eine umlaufende zylinderförmige Seitenwand 2, die mit einem Boden 3 verbunden ist und sich bis zu einer Einfüllöffnung 13 erstreckt. In der Bodenmitte ist eine Auslassdüse 4 für einen Strang aus der viskosen Quarzglasmasse vorgesehen. Die Seitenwand 2 setzt sich aus zwei in separaten Verfahren erzeugten Wandungsformteilen zusammen, nämlich einem unteren hohlzylinderförmigen Wandungsformteil 5 und einem oberen hohlzylinderförmigen Wandungsformteil 6. Die Wanddicken von oberem und unterem Wandungsformteil sind gleich, nämlich 8 mm.

Die obere Stirnseite des unteren Wandungsformteils 5 und die untere Stirnseite des oberen Wandungsformteils 6 stoßen in einem Fügebereich 11 zusammen und sind mittels Doppel-Laschenverbindung 7 miteinander verbunden. Die Laschenverbindung 7 besteht aus einer Innenplattenring 7a, einem Außenplattenring 7b und einer Vielzahl von Nieten 7c. Der Innenplattenring 7a und der Außenplattenring 7b sind jeweils aus vier Kreissegmenten zusammengesetzt, die an der Innenseite (7a) der Seitenwand 2 beziehungsweise an der Außenseite (7b) der Seitenwand anliegen und mittels einer Vielzahl von Nieten 7c miteinander verbunden sind. Die Oberseite des unteren Wandungsformteils 5 bildet gleichzeitig einen um die Längsachse 10 umlaufenden Fügebereich 11 in der Höhenposition H_{F} = 1400 mm. Die Gesamt-Tiegelhöhe H_{T} beträgt 2200 mm.

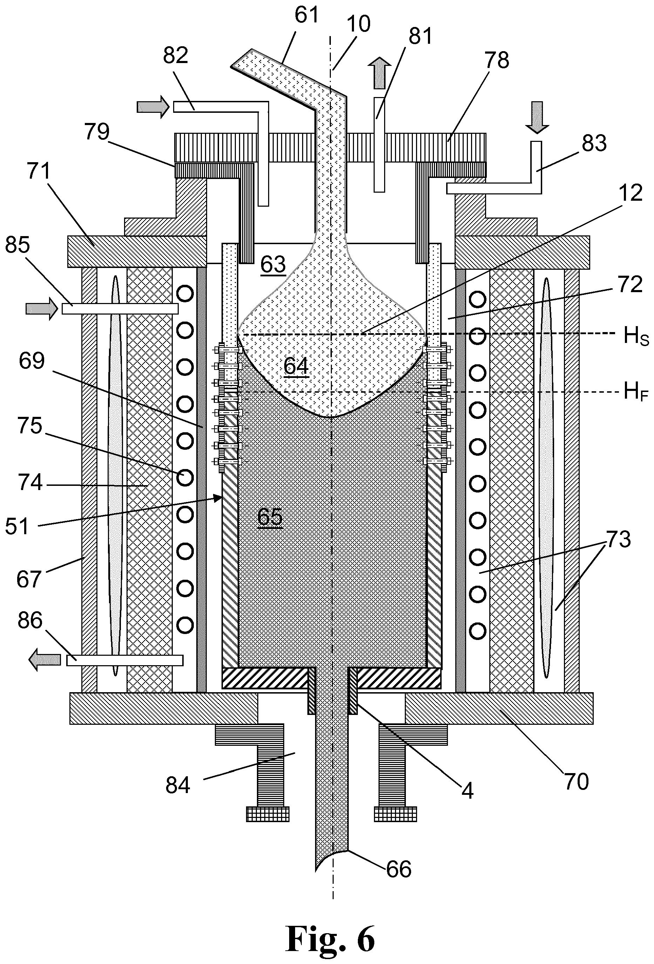

Die optimale Höhenposition H_{S} der Schmelzoberfläche (siehe Figur 6) der im Betrieb im Schmelztiegel 1 aufzunehmenden Glasschmelze ist durch die punktierte Linie 12 gekennzeichnet. Die Höhenposition H_{S} liegt oberhalb des Fügebereichs 11 und oberhalb der Laschenverbindung 7.

Der Boden 3, die Auslassdüse 4 sowie das untere Formteil 5 und das obere Formteil 6 bestehen aus Wolfram.

**Figur 2** zeigt das obere Wandungsformteil 6 in einer Draufsicht. Es liegt als nahtlos gesinterte Ronde (Ringkörper) vor. Im Unterschied zur Außenwandung 9 wird die Innenwandung 8 in einer oberflächlichen Randzone mit einer Tiefe von etwa 500 µm durch Kugelstrahlen verdichtet, so dass die Wandung des oberen Wandungsformteils 6 insgesamt vollkommen gasdicht ist. Die Darstellung der Figuren ist nicht maßstabsgetreu; insbesondere ist in den Figuren 1 und 2 die Dicke der verdichteten Zone an der Tiegel-Innenwandung aus Darstellungsgründen übertrieben dick eingezeichnet.

Die Draufsicht von **Figur 3** zeigt, dass das untere Wandungsformteil 5 aus vier Wandsegmenten 30 zusammengesetzt ist, die ebenfalls mittels Laschenverbindungen 31 miteinander verbunden sind. Das untere Wandungsformteil 5 ist jedenfalls anfänglich nicht gasdicht. Die Herstellung des unteren Wandungsformteils 5 durch Vernieten von Wandsegmenten 30 ist jedoch kostengünstig im Vergleich zu anderen Herstellungsmethoden.

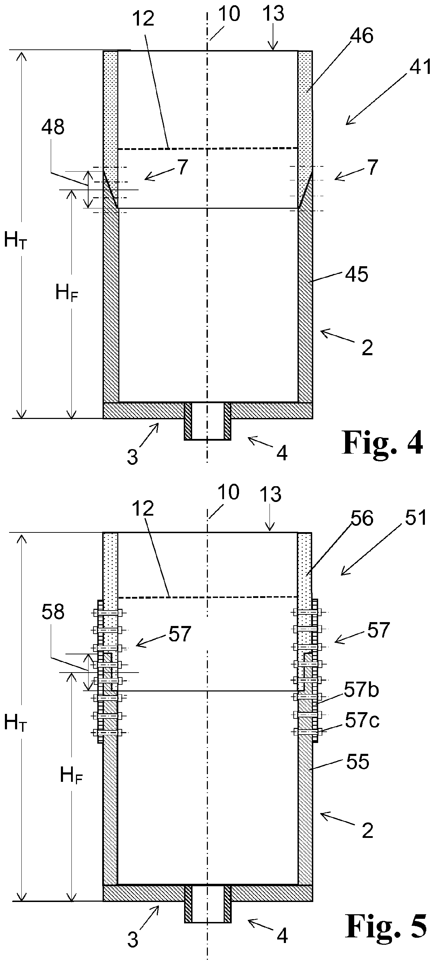

Auch die in **Figur 4** schematisch dargestellte Ausführungsform eines Schmelztiegels 41 verfügt über eine umlaufende zylinderförmige Seitenwand 2, Boden 3 und Auslassdüse 4.

Die Seitenwand 2 setzt sich aus einem unteren hohlzylinderförmigen Wandungsformteil 45 und einem oberen hohlzylinderförmigen Wandungsformteil 46 mit jeweils gleicher Wanddicke von 8 mm zusammen.

Im Unterschied zu der in Figur 1 gezeigten Ausführungsform ist die obere Stirnseite des unteren Wandungsformteils 45 nach oben hin abgeschrägt, und die untere Stirnseite des oberen Wandungsformteil4 6 ist nach unten hin abgeschrägt, so dass die beiden Schrägen in einem durch den Blockpfeil 48 angezeigten Überlappungsbereich (48) überlappen. Um den Überlappungsbereich 48 ist eine Nietverbindung in Form eine Doppellaschung 7 vorgesehen, wie anhand Figur 1 beschrieben (in Figur 4 aus Gründen der Übersichtlichkeit nur anhand der Mittellinien der Nieten 7 angedeutet).

Der Überlappungsbereich 48 entspricht gleichzeitig dem Fügeberich, wobei die Höhenposition H_{F} in dessen Mitte angenommen wird und bei H_{F} = 1400 mm liegt. Die Gesamt-Tiegelhöhe H_{T} beträgt 2200 mm.

Die optimale Höhenposition H_{S} der Schmelzoberfläche ist durch die punktierte Linie 12 gekennzeichnet und liegt oberhalb des Überlappungsbereichs 48 und oberhalb der Laschenverbindung 7.

Der Boden 3, die Auslassdüse 4 sowie das untere Formteil 45 und das obere Formteil 46 bestehen aus Wolfram.

Das obere Wandungsformteil 46 bildet eine nahtlose Ronde, die aus einem nahtlosen Blechrohr gefertigt und durch Fließpressen umgeformt wird. Dabei wird das runde Wolfram-Blech erhitzt und rotierend mittels eines Stempels über eine zylinderförmige Matrize gedrückt. Die Wandung ist vollkommen gasdicht. Die Abschrägung an der Unterseite der Ronde wird abschließend angeschliffen.

Das untere Wandungsformteil 45 ist - wie zur Ausführungsform von Figur 1 erläutert - aus Wandsegmenten (30; siehe Figur 3) zusammengesetzt und nicht gasdicht.

Die Ausführungsform des in **Figur 5** schematisch dargestellten Schmelztiegels 51 verfügt ebenfalls über eine umlaufende zylinderförmige Seitenwand 2 und einen Boden 3 mit Auslassdüse 4.

Die Seitenwand 2 ist aus einem unteren hohlzylinderförmigen Wandungsformteil 55 und einem oberen hohlzylinderförmigen Wandungsformteil 56 mit jeweils gleicher Wanddicke von 8 mm in einem geraden Stoß zusammengesetzt, wobei im Unterschied zu der in Figur 4 gezeigten Ausführungsform ein Überlappungsbereich 58 dadurch erzeugt wird, dass die obere Stirnseite des unteren Wandungsformteils 55 eine innen umlaufenden Einschnitt und die die untere Stirnseite des oberen Wandungsformteil 56 einen außen umlaufenden Einschnitt haben.

Um den Überlappungsbereich 58 ist eine Nietverbindung in Form eine Einfachlaschung 77 vorgesehen, bei der kreissegmentförmig gebogene Laschenbleche 57b an der Tiegel-Seitenwand 2 außen anliegen und mittels Nieten 57c mit dieser verbunden sind.

Der Überlappungsbereich 58 entspricht gleichzeitig dem Fügeberich, wobei die Höhenposition H_{F} in dessen Mitte angenommen wird und bei H_{F} = 1400 mm liegt. Die Gesamt-Tiegelhöhe H_{T} beträgt 2200 mm.

Die optimale Höhenposition H_{S} der Schmelzoberfläche ist durch die punktierte Linie 12 gekennzeichnet und liegt oberhalb des Überlappungsbereichs 58 und oberhalb der Laschenverbindung 57.

Der Boden 3, die Auslassdüse 4 sowie das untere Formteil 55 und das obere Formteil 56 bestehen aus Wolfram.

Das obere Wandungsformteil 56 ist aus einem gewalzten Blechrohr gefertigt und wird durch Schmieden zu eine nahtlosen Ronde umgeformt. Die Wandung ist vollkommen gasdicht. Der Einschnitt an der Unterseite des verdichteten Blechrohres wird abschließend eingefräst.

Das untere Wandungsformteil 55 ist-wie zur Ausführungsform von Figur 1 erläutert - aus Wandsegmenten (30; siehe Figur 3) zusammengesetzt und nicht gasdicht.

Der **Figur 6** schematisch gezeigte Ziehofen umfasst einen mehrteiligen Schmelztiegel 51, wie anhand Figur 5 erläutert, und dessen Seitenwand (2) sich zusammensetzt aus einem unteren, anfänglich nicht gasdichten Wandungsformteil (55) und einem oberen, gasdichten Wandungsformteil (56). Im Bodenbereich des Schmelztiegels 51 ist eine Ziehdüse 4 eingesetzt, durch die erweichte Quarzglasmasse austritt und als Strang 66 abgezogen wird.

Der Schmelztiegel 51 ist von einem wassergekühlten Ofenmantel 67 unter Bildung eines Heizraums 73 umgeben. Der Heizraum 73 ist durch eine Trennwand 69 aus Molybdän, die im Bereich ihrer beiden Stirnseiten gegenüber einer Bodenplatte 70 und einer Deckplatte 71 abgedichtet. Innerhalb des Heizraums 73 sind eine poröse Isolationsschicht 74 aus oxidischem Isolationsmaterial und eine Widerstandsheizeinrichtung 75 zum Erhitzen des Schmelztiegels 51 untergebracht.

Der Schmelztiegel 51 umschließt einen Gas- und Schüttgutraum 63 oberhalb eines Schmelzraums (65) zur Aufnahme der erweichten Quarzglasmasse 65. Der Gas- und Schüttgutraum 63 ist gegenüber der Umgebung mittels einer Abdeckung 78 und einem Dichtelement 79 abgedichtet. Die Abdeckung 78 ist mit einem Einlass 81 und einem Auslass 82 für ein Tiegelinnenraum-Gas in Form von reinem Wasserstoff versehen.

Ebenso ist ein innenliegender Ringraum 72 im oberen Bereich mit einem Gaseinlass 83 für reinen Wasserstoff versehen. Nach unten hin ist der innenliegende Ringraum 72 offen, so dass der Wasserstoff über die Bodenöffnung 84 des Ofenmantels 67 entweichen kann.

Der außenliegende Ringraum 73 weist im Bereich des oberen Endes einen Einlass 85 für ein Schutzgas in Form eines Stickstoff-Wasserstoffgemischs (5 Vol.-% H₂) auf und in seinem unteren Bereich einen Auslass 66 für das Schutzgas. Das Schutzgas durchströmt die poröse Isolationsschicht 74 und die umströmt die Außenwandung der Trennwand 69.

Dem Schmelztiegel 51 wird von oben über einen Zufuhrstutzen 61 kontinuierlich SiO₂-Körnung zugeführt und darin erweicht. Durch die Ziehdüse 4 tritt erweichte Quarzglasmasse aus und wird als Strang 66 abgezogen.

Im oberen Bereich des Tiegel-Innenraums bildet die Körnung einen Schüttkegel 64, der auf erweichter, viskoser Quarzglasmasse 65 aufschwimmt. Der Übergang zwischen Schüttkegel 64 und erweichter, viskoser Quarzglasmasse 65 ist an der Tiegelinnenseite wird hier als "Schmelzoberfläche" bezeichnet. Diese hat vom Tiegelboden aus entlang der Längsachse 10 gesehen die Höhenposition H_{S}. Ab der Höhenposition H_{S} dichtet somit die viskose Quarzglasmasse 65 die Schmelztiegel-Wandung nach außen ab. Die Höhenposition H_{S} liegt oberhalb der Höhenposition der Fügestelle H_{F} und auch oberhalb der Laschenverbindung (57) von oberem und unterem Wandungsformteil (55, 56).

Da das obere Wandungsformteil (56) vollkommen gasdicht ist, und von der Tiegel-Seitenwand (2) lediglich das obere Wandungsformteil (56) ohne Fügestelle und Verbindungsmittel dem Gas- und Schüttgutraum 43 ausgesetzt ist, kann kein Gas über die Seitenwand (2) in den Gas- und Schüttgutraum 43 eindringen.

## Patentansprüche

1. Schmelztiegel (1; 41; 51) für den Einsatz in einem Tiegelziehverfahren, mit einer sich entlang einer Tiegel-Längsachse (10) von einem Boden (3) mit mindestens einem Bodenauslass (4) zu einer Einfüllöffnung (13) erstreckenden Tiegelwandung (2), die einen Tiegelinnenraum (63; 65) begrenzt, **dadurch gekennzeichnet, dass** die Tiegelwandung (2) mehrteilig ausgeführt ist, wobei sie sich in Richtung der Längsachse (10) gesehen aus mindestens einem unteren Wandungsformteil (5; 45; 55) und aus einem oberen Wandungsformteil (6; 46; 56) zusammensetzt, wobei das untere Wandungsformteil (5; 45; 55) und das obere Wandungsformteil (6; 46; 56) an einer Fügestelle (11; 48; 58) miteinander verbunden sind.

2. Schmelztiegel nach Anspruch 1, **dadurch gekennzeichnet, dass** das obere Wandungsformteil (6; 46; 56) eine geringere Gasdurchlässigkeit aufweist als das untere Wandungsformteil (5; 45; 55), wobei vorzugsweise das untere Wandungsformteil (5; 45; 55) gasdurchlässig ist, und dass das obere Wandungsformteil (6; 46; 56) gasdicht ist.

3. Schmelztiegel nach Anspruch 1 oder 2, **dadurch gekennzeichnet, dass** der Tiegelinnenraum (63; 65) in Richtung der Längsachse (10) gesehen einen Schmelzraum (65) zur Aufnahme von erweichtem Glasmaterial und einen an den Schmelzraum (65) nach oben angrenzenden Gas- und Schüttgutraum (63) aufweist, wobei die an den Gas- und Schüttgutraum (63) angrenzende Tiegelwandung (2) von dem oberen Wandungsformteil (6; 46; 56) gebildet wird.

4. Schmelztiegel nach einem der vorhergehenden Ansprüche, **dadurch gekennzeichnet, dass** der Tiegelinnenraum (63; 65) in Richtung der Längsachse (10) gesehen einen Schmelzraum (65) zur Aufnahme von erweichtem Glasmaterial und einen an den Schmelzraum (65) nach oben angrenzenden Gas- und Schüttgutraum (63) aufweist, wobei das untere Wandungsformteil (5; 45; 55) ausschließlich dem Schmelzraum (65) zugewandt ist.

5. Schmelztiegel nach Anspruch 3 oder 4, **dadurch gekennzeichnet, dass** die Fügestelle (11; 48; 58) unterhalb des Gas- und Schüttgutraums verläuft.

6. Schmelztiegel nach einem der vorhergehenden Ansprüche, **dadurch gekennzeichnet, dass** die Tiegelwandung eine Höhe H_{T} aufweist - definiert als Abstand zwischen einer unteren Höhenebene, in der sich ein Bodenauslass des Schmelztiegels erstreckt und einer parallel dazu verlaufenden oberen Höhenebene, in der sich eine Tiegel-Einfüllöffnung erstreckt - und dass sich die Fügestelle (11; 48; 58) in einer Höhenposition H_{F} befindet, für die gilt: 0,6 x H_{T} < H_{F} < 0,9 x H_{T}.

7. Schmelztiegel nach einem der vorhergehenden Ansprüche, **dadurch gekennzeichnet, dass** das obere Wandungsformteil (6; 46; 56) als nahtloses Rundformteil ausgebildet ist.

8. Schmelztiegel nach Anspruch 7, **dadurch gekennzeichnet, dass** das nahtlose Rundformteil durch Druckumformung von gewalztem Blech erzeugt ist, wobei das gewalzte Blech vorzugsweise aus Wolfram, Molybdän, Niob, Tantal oder einer Legierung dieser Metalle gefertigt ist.

9. Schmelztiegel nach einem der vorhergehenden Ansprüche, **dadurch gekennzeichnet, dass** das untere Wandungsformteil (5; 45; 55) aus mehreren Wandelementen (30) zusammengesetzt ist.

10. Schmelztiegel nach Anspruch 9, **dadurch gekennzeichnet, dass** benachbarte Wandelemente (3) mittels stiftförmiger Verbindungselemente (31) formschlüssig miteinander verbunden sind.

11. Verfahren zu Herstellung eines Schmelztiegels (1; 41; 51) für den Einsatz in einem Tiegelziehverfahren, mit einer sich entlang einer Tiegel-Längsachse (10) von einem Boden (3) mit mindestens einem Bodenauslass (4) zu einer Einfüllöffnung (13) erstreckenden Tiegelwandung (2), die einen Tiegelinnenraum (63; 65) begrenzt, **dadurch gekennzeichnet, dass** die Tiegelwandung (2) in Richtung der Längsachse (10) gesehen mehrteilig aus mindestens einem unteren Wandungsformteil (5; 45; 55) und mindestens einem oberen Wandungsformteil (6; 46; 56) zusammengesetzt wird, wobei anhand eines ersten Fertigungsprozesses das untere Wandungsformteil (5; 45; 55) und anhand eines zweiten Fertigungsprozesses das obere Wandungsformteil (6; 46; 56) gefertigt werden, und anschließend das untere Wandungsformteil (5; 45; 55) und das obere Wandungsformteil (6; 46; 56) miteinander verbunden werden.

12. Verfahren nach Anspruch 11, **dadurch gekennzeichnet, dass** das obere Wandungsformteil (6; 46; 56) so gefertigt wird, dass es eine geringere Gasdurchlässigkeit hat als das untere Wandungsformteil (5; 45; 55), wobei vorzugsweise das untere Wandungsformteil (5; 45; 55) gasdurchlässig ist, und das obere Wandungsformteil (6; 46; 56) gasdicht ist.

13. Verfahren nach Anspruch 11 oder 12, **dadurch gekennzeichnet, dass** das obere Wandungsformteil (6; 46; 56) aus einem gasdichten nahtlosen Rundformteil geformt wird.

14. Verfahren nach Anspruch 13, **dadurch gekennzeichnet, dass** das nahtlose Rundformteil durch Druckumformung von gewalztem Blech, vorzugsweise aus Wolfram, Molybdän, Niob, Tantal oder einer Legierung dieser Metalle geformt wird.

15. Verfahren nach einem der Ansprüche 11 bis 14, **dadurch gekennzeichnet, dass** das untere Wandungsformteil (5; 45; 55) aus mehreren Wandelementen (30) zusammengesetzt wird, wobei benachbarte Wandelemente (30) vorzugsweise mittels stiftförmiger Verbindungselemente (31) miteinander verbunden werden.

16. Vertikal-Tiegelziehverfahren zur Herstellung eines zylinderförmigen Bauteils aus Glas (66), indem einem Tiegel-Innenraum (63; 65) eines Schmelztiegels (1; 41; 51) Glasausgangsmaterial (64) zugeführt und darin mittels einer Heizeinrichtung (75) erweicht wird, und die erweichte Glasmasse (65) durch mindestens einen Bodenauslauf (4) des Schmelztiegels (1; 41; 51) als Glasstrang (66) abgezogen wird, **dadurch gekennzeichnet, dass** ein mehrteiliger Schmelztiegel (1; 41; 51) nach einem der Ansprüche 1 bis 10 oder dass ein nach dem Verfahren gemäß den Ansprüchen 11 bis 15 erzeugter Schmelztiegel (1; 41; 51) eingesetzt wird.
